# FASCICULE DE BREVET EUROPEEN

(11) **EP 1 561 969 B1**
(45) Date de publication et mention de la délivrance du brevet: **30.04.2008**
(21) Numéro de dépôt: 04028792.2
(22) Date de dépôt: 04.12.2004
(51) Int. Cl.: F16H 25/20, H02K 7/06

(54) **Actionneur linéaire**
Linearstellelement
Linear actuator

(30) Priorité: 09.02.2004 FR 0401229
(43) Date de publication de la demande: 10.08.2005
(73) Titulaire: Société Industrielle de Sonceboz S.A., 2605 Sonceboz (CH)
(72) Inventeur: Pfister, Jean-Francois, CH-2605 Sonceboz (CH); Gandel, Pierre, 25660 Montfaucon (FR)
(74) Mandataire: Reuteler, Raymond Werner

(56) Documents cités:
- EP-A- 0 605 283
- US-A- 4 987 822
- US-A- 5 634 373
- US-A1- 2003 005 785

## Description

La présente invention concerne un actionneur linéaire, notamment un actionneur comprenant un moteur avec un rotor sous forme d'écrou engageant une vis à déplacement linéaire.

Des actionneurs linéaires du type susmentionné sont utilisés dans de nombreuses applications, telles que pour la commande de vannes et le déplacement d'organes de machines ou de robots, pour n'en citer que quelques exemples.

Dans des applications où l'actionneur linéaire est utilisé pour le positionnement d'un élément mobile par rapport à un support, il est courant de prévoir un détecteur de position monté sur l'élément mobile afin de détecter sa position par rapport au support, ce capteur étant relié à une unité de commande du moteur. Le document EP 0605283 A1 divulgue un actionneur linéaire conformément au préambule de la revendication 1.

Bien que le montage d'un capteur sur l'élément mobile permet le positionnement précis de cet élément, les interconnexions et le montage séparé de composants formant le système de positionnement influent négativement sur la fiabilité du système. La saisie de la position de l'organe mobile peut également être un inconvénient dans le cas où il y a un certain jeu entre l'organe et l'actionneur linéaire, lorsque l'on souhaite fixer une position de référence autour de laquelle un certain jeu serait acceptable. Dans le cas de saisie de la position directe de l'organe mobile, il est difficile de trouver la position de référence autour de laquelle un certain jeu est permis, puisque l'organe mobile pourrait être situé à une extrémité ou l'autre de la plage de jeu.

Un inconvénient de nombreux actionneurs est qu'ils sont couplés à des organes à déplacer à travers une ou plusieurs articulations s'étendant généralement dans le prolongement de l'axe de la vis, notamment dans des applications où l'actionneur linéaire est utilisé pour le pivotement d'un organe mobile. Ces éléments intermédiaires augmentent le jeu, et le coût des dispositifs.

Un autre inconvénient de nombreux actionneurs linéaires est que la vis à déplacement linéaire ne se trouve pas bien protégée de son environnement, notamment par rapport à la salissure ou une interférence avec des objets ou débris à l'extérieur de l'actionneur.

Au vu des inconvénients précités, un but de l'invention est de fournir un système de positionnement avec un actionneur linéaire, qui est fiable et économe. Il est avantageux de fournir un actionneur compact et facile à installer.

Il est avantageux de fournir un actionneur pouvant définir une position de référence de manière précise.

Il est avantageux de fournir un actionneur destiné à faire pivoter un organe mobile, et qui est peu encombrant, précis et protégé de son environnement.

Des buts de l'invention sont réalisés par l'actionneur linéaire selon la revendication 1.

Dans la présente invention, un actionneur linéaire pour le déplacement d'un organe ou d'un ensemble d'organes mobiles comprend un moteur électrique pas-à-pas et un système vis-écrou ayant une partie d'accouplement disposée à une de ces extrémités et destinée à engager une partie d'accouplement de l'organe mobile à déplacer, tel que décrit dans la revendication 1.

Le capteur de position peut par exemple être un capteur détectant une position médiane de la course de la partie d'accouplement de la vis, et ayant par exemple un élément à effet Hall monté dans le boîtier de l'actionneur, et un aimant à un ou plusieurs segments montés dans la partie d'accouplement de la vis. De préférence, l'aimant a deux segments de polarité opposée, l'interface entre les deux segments formant la position de référence médiane détectée par l'élément de Hall.

Les bornes électriques reliées au capteur, ainsi qu'aux bobines du moteur, peuvent avantageusement être intégrées dans un connecteur pour l'interconnexion de l'actionneur à un connecteur complémentaire relié à une unité de commande, ou directement connectées à un circuit imprimé de l'unité de commande, disposé sur, ou formant le support de l'actionneur.

Pour des applications de pivotement d'un organe mobile par rapport à un support, le boîtier de l'actionneur peut avantageusement comprendre une fente longitudinale disposée le long de la vis linéaire afin de permettre l'accès direct de l'organe mobile pour son accouplement à la partie d'accouplement du système vis-écrou.

L'accès direct et transversal d'une partie de l'organe mobile à pivoter réduit le nombre de pièces et les jeux, et permet une configuration à faible encombrement. Une fente de part et d'autre de la vis linéaire peut être prévue, de manière à rendre l'actionneur symétrique et utilisable pour engager un organe mobile dans des orientations du moteur et de la vis linéaire à 0° et à 180°. On peut également prévoir une seule fente longitudinale, disposée sur le dessus du boîtier par rapport au support sur lequel l'actionneur est monté.

Avantageusement, l'intégration d'un capteur de position de référence directement dans le boîtier de l'actuateur et sur la partie d'accouplement du système vis-écrou permet de définir de manière fiable une position de référence de l'organe mobile, avec un actionneur compact et simple. L'intégration des bornes du capteur dans un connecteur commun comprenant des bornes reliées aux bobines du moteur, simplifie l'interconnexion du système à l'unité de commande dans une configuration compacte. L'engagement direct de l'organe mobile à l'extrémité de la vis à travers la fente du boîtier permet, d'une part d'assurer une certaine protection des parties mobiles de l'actionneur de l'environnement, tout en réduisant le nombre des pièces et d'articulations qui pourrait augmenter les jeux, ainsi que les coûts et la complexité du système.

D'autres buts et aspects avantageux de l'invention ressortiront des revendications, de la description détaillée ci-après, ainsi que des dessins annexés, dans lesquels:

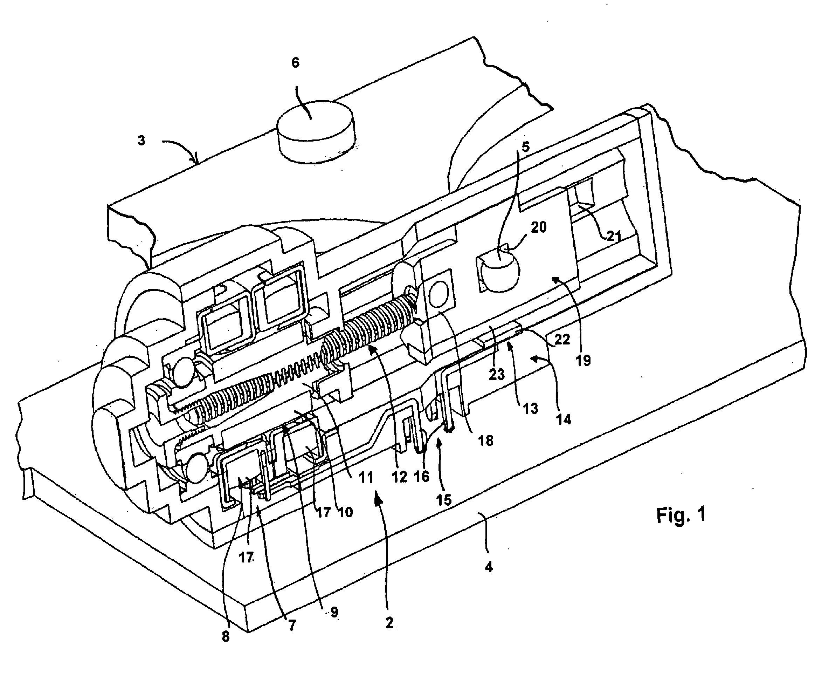

La Fig. 1 est une vue en perspective, en coupe, d'un actionneur linéaire selon l'invention, monté sur un support et engageant une partie d'un organe mobile;

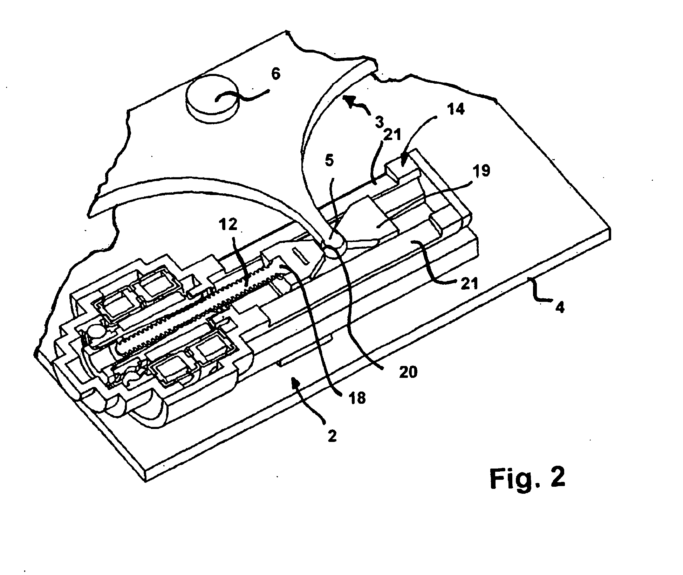

La Fig. 2 est une vue en perspective, selon une autre coupe, de l'actionneur selon l'invention.

Faisant référence aux figures, un système de positionnement est illustré, comprenant un actionneur linéaire 2 pour le déplacement d'un organe mobile 3, dans cet exemple, pour la rotation de l'organe mobile 3 autour d'un axe de pivotement 6 fixé à un support 4.

L'actionneur 2 comprend un moteur pas-à-pas 7 avec une partie statorique bobinée 8 et un rotor 9 avec des aimants permanents 10 et une partie d'écrou 11, une vis 12 à déplacement linéaire engageant la partie d'écrou du rotor, un capteur de position 13 et un boîtier 14 dans lequel sont montés le moteur, la vis à déplacement linéaire et le capteur. L'actionneur comporte en outre un connecteur 15 formé intégralement avec le boîtier et comprenant des bornes électriques 16 reliées d'une part aux bobines statoriques 17 du moteur et au capteur de position 13 d'autre part.

A une extrémité 18 opposée du moteur, la vis à déplacement linéaire est fixée à une partie d'accouplement 19, dans cet exemple en matière plastique fixée ou surmoulée sur l'extrémité de la vis, et montée de manière à pouvoir glisser longitudinalement dans le boîtier 14. La partie d'accouplement 19 a une forme non axisymétrique afin de bloquer la rotation de cette partie ainsi que de la vis. La partie d'accouplement comprend en outre, dans cet exemple, un logement 20 dans lequel la partie d'accouplement 5 de l'organe mobile 3 vient se loger.

Dans le cadre de l'invention, il est également possible d'avoir un système vis-écrou où la vis comprend une partie de rotor, entraînée en rotation par le moteur pas-à-pas, et un écrou à déplacement linéaire qui comprend la partie d'accouplement. La vis est donc montée sur des paliers pour permettre sa rotation et le blocage de son déplacement linéaire, tandis que l'écrou est monté de manière à pouvoir glisser dans le boîtier, sa rotation étant bloquée.

Afin de permettre la connexion directe entre l'organe mobile et la partie d'accouplement, le boîtier est muni d'une fente longitudinale 21, le moteur, la vis, le capteur et la partie d'accouplement étant ainsi protégés de l'environnement extérieur par le boîtier.

Avantageusement, l'actionneur selon l'invention forme une unité compacte, intégrant les fonctions d'entraînement et de positionnement d'une partie d'accouplement dans une position de référence, le moteur et le capteur de l'unité pouvant être connectés avec une seule prise à l'unité de commande.

En outre, l'insertion d'une partie d'accouplement de l'organe mobile à positionner à travers d'une fente du boîtier, et son accouplement direct avec une partie solidaire avec la vis linéaire permettent de minimiser les jeux et le nombre de composants, tout en ayant une vis protégée de son environnement. L'accouplement transversal de la partie de l'organe mobile 5 par rapport à la partie d'accouplement 19 est particulièrement avantageux pour des applications où l'organe mobile 3 pivote autour d'un axe 6. Dans ce cas, la matière plastique, telle que du téflon ou du nylon de la partie d'accouplement 19 de la vis linéaire, permet d'avoir une forme de logement 20 adaptée à la forme de la partie d'accouplement de l'organe mobile, afin de réduire le frottement et l'usure et d'amortir les vibrations et chocs.

Le capteur de position de référence peut comprendre un élément à effet Hall 22 monté à l'intérieur du boîtier et connecté à des bornes électriques 16 du connecteur. Le capteur comprend en outre un aimant 23 à deux segments juxtaposés, les segments ayant des polarités opposées, l'interface entre les deux segments définissant la position de référence par rapport à l'élément à effet Hall. L'élément Hall détecte le changement de direction du champ magnétique et le point milieu entre les segments quand il est directement en face de l'élément Hall. La détection de position selon le principe précité est déjà connue en soi et utilisée dans de divers systèmes. Dans le cadre de cette invention, on peut également intégrer d'autres capteurs ou détecteurs de position, et même des détecteurs de type interrupteur ou à bascule.

## Revendications

1. Actionneur linéaire comprenant un boîtier (14), un moteur pas-à-pas (7) et un système vis-écrou (11, 12) entraîné par le moteur et ayant une partie d'accouplement (19) pour engager une partie d'accouplement complémentaire (5) d'un organe mobile à positionner (3), la partie d'accouplement étant montée de manière glissante dans le boîtier et étant non axisymétrique afin d'arrêter sa rotation, l'actionneur comprenant en outre un capteur de position(13) monté dans le boîtier **caractérisé en ce que** ledit capteur de position (13) comprend un élément (22) monté dans le boîtier et relié à des bornes électriques (16) d'un connecteur (15) de l'actionneur, et un élément complémentaire (23) monté sur la partie d'accouplement (19) du système vis-écrou et définissant la position de référence par rapport à l'élément (22) monté dans le boîtier.

2. Actionneur selon la revendication 1, **caractérisé en ce que** les bobines (17) du moteur pas-à-pas (7) sont reliées à des bornes électriques (16) disposées dans le connecteur (15) comprenant les bornes (16) reliées au capteur de position (13), la partie de boîtier du connecteur (15) étant intégralement formée avec le boîtier (14) de l'actionneur.

3. Actionneur selon l'une des revendications précédentes, **caractérisé en ce que** le boîtier (14) comprend une fente longitudinale (21) permettant l'accès de la partie d'accouplement (19) de l'organe mobile (3) directement à la partie de boîtier dans laquelle la partie d'accouplement (19) du système vis-écrou (11,12) est montée de manière glissante, la partie d'accouplement (19) du système vis-écrou (11,12) étant en prise directe ' avec la partie d'accouplement de l'organe mobile (5).

4. Actionneur selon l'une des revendications précédentes, **caractérisé en ce que** le capteur (13) comprend un élément à effet Hall logé à l'intérieur de la partie de boîtier recevant la partie d'accouplement (19) du système vis-écrou, dans une position essentiellement médiane entre les positions limites de la course de la partie d'accouplement du système vis-écrou.

5. Actionneur selon l'une des revendications précédentes, **caractérisé en ce que** le système vis-écrou comprend une vis (12) à déplacement linéaire et un écrou (11) formant le rotor (9) du moteur.

6. Actionneur selon la revendication précédente, **caractérisé en ce que** la partie d'accouplement (19), du système vis-écrou (11,12) est en matière plastique surmoulée ou fixée à l'extrémité de la vis à déplacement linéaire.

7. Actionneur selon l'une des revendications 1 à 4, **caractérisé en ce que** le système vis-écrou (11,12) comporte une vis (12) comprenant une partie de rotor (9) entraînée en rotation par le moteur (7), et un écrou (11) à déplacement linéaire qui comprend la partie d'accouplement (19).

## Claims

1. A linear actuator comprising a casing (14), a stepping motor (7) and a screw-nut system (11,12) driven by the motor and having a coupling portion (19) for engaging with a complementary coupling portion (5) of a mobile member (3) to be positioned, the coupling portion being slidably mounted in the casing and being non-axisymmetrical in order to stop its rotation, the actuator further comprising a position sensor (13) mounted in the casing, **characterized in that** said position sensor (13) comprises an element (22) mounted in the casing and connected to electric terminals (16) of a connector (15) of the actuator, and a complementary element (23) mounted on the coupling portion (19) of the screw-nut system and defining the reference position relatively to the element (22) mounted in the casing.

2. The actuator according to claim 1, **characterized in that** the coils (17) of the stepping motor (7) are connected to electric terminals (16) positioned in the connector (15) comprising the terminals (16) connected to the position sensor (13), the casing portion of the connector (15) being integrally formed with the casing (14) of the actuator.

3. The actuator according to any of the preceding claims, **characterized in that** the casing (14) comprises a longitudinal slot (21) allowing the coupling portion (19) of the mobile member (3) to directly access the casing portion in which the coupling portion (19) of the screw-nut system (11, 12) is slidably mounted, the coupling portion (19) of the screw-nut system (11, 12) being directly engaged with the coupling portion of the mobile member (5).

4. The actuator according to any of the preceding claims, **characterized in that** the sensor (13) comprises a Hall effect element housed inside the casing portion receiving the coupling portion (19) of the screw-nut system, in an essentially median position between the limiting positions of the travel of the coupling portion of the screw-nut system.

5. The actuator according to any of the preceding claims, **characterized in that** the screw-nut system comprises a linear displacement screw (12) and nut (11) forming the rotor (9) of the motor.

6. The actuator according to any of the preceding claims, **characterized in that** the coupling portion (19) of the screw-nut system (11, 12) is in plastic material overmoulded or attached to the end of the linear displacement screw.

7. The actuator according to claims 1 to 4, **characterized in that** the screw-nut system (11, 12) includes a screw (12) comprising a rotor portion (9) driven into rotation by the motor (7), and a linear displacement nut (11) which comprises the coupling portion (19).

## Patentansprüche

1. Lineares Stellelement mit einem Gehäuse (14), einem Schrittmotor (7) und einem durch den Motor angetriebenen Schraube-Mutter-System (11, 12), das ein Ankopplungsteil (19) besitzt, um ein komplementäres Ankopplungsteil (5) eines zu positionierenden beweglichen Organs (3) einzukuppeln, wobei das Ankopplungsteil gleitend in das Gehäuse montiert und nicht axialsymmetrisch ist, um seine Drehung zu stoppen, und das Stellelement ausserdem einen in das Gehäuse montierten Positionsfühler (13) umfasst, **dadurch gekennzeichnet, dass** der Positionsfühler (13) ein in das Gehäuse montiertes und an elektrische Kontakte (16) einer Steckverbindung (15) des Stellelements angeschlossenes Element (22) sowie ein komplementäres Element (23) umfasst, das auf das Ankopplungsteil (19) des Schraube-Mutter-Systems montiert ist und die Bezugsposition relativ zu dem in das Gehäuse montierten Element (22) definiert.

2. Stellelement nach Anspruch 1, **dadurch gekennzeichnet, dass** die Spulen (17) des Schrittmotors (7) an elektrische Kontakte (16) angeschlossen sind, die in der Steckverbindung (15) angeordnet sind, die die mit dem Positionsfühler (13) verbundenen Kontakte (16) umfasst, wobei das Gehäuseteil der Steckverbindung (15) mit dem Gehäuse (14) des Stellelements integral ausgebildet ist.

3. Stellelement nach einem der vorangehenden Ansprüche, **dadurch gekennzeichnet, dass** das Gehäuse (14) einen Längsschlitz (21) umfasst, der Zugang zum Ankopplungsteil (19) des beweglichen Organs (3) direkt an dem Gehäuseteil gestattet, worin das Ankopplungsteil (19) des Schraube-Mutter-Systems (11, 12) gleitend montiert ist, wobei das Ankopplungsteil (19) des Schraube-Mutter-Systems (11, 12) im direkten Eingriff mit dem Ankopplungsteil des beweglichen Organs (5) steht.

4. Stellelement nach einem der vorangehenden Ansprüche, **dadurch gekennzeichnet, dass** der Fühler (13) eine Hall-Sonde umfasst, die an einer Stelle im Wesentlichen in der Mitte zwischen den Grenzstellungen der Auslenkung des Ankopplungsteils des Schraube-Mutter-Systems im Inneren des Gehäuseteils untergebracht ist, wo das Ankopplungsteil (19) des Schraube-Mutter-Systems aufgenommen wird.

5. Stellelement nach einem der vorangehenden Ansprüche, **dadurch gekennzeichnet, dass** das Schraube-Mutter-System eine linear verschiebende Schraube (12) und eine den Rotor (9) des Motors bildende Mutter (11) umfasst.

6. Stellelement nach dem vorangehenden Anspruch, **dadurch gekennzeichnet, dass** das Ankopplungsteil (19) des Schraube-Mutter-Systems (11, 12) aus am Ende der linear verschiebenden Schraube überspritztem oder befestigtem Kunststoff besteht.

7. Stellelement nach einem der Ansprüche 1 bis 4, **dadurch gekennzeichnet, dass** das Schraube-Mutter-System (11, 12) eine Schraube (12), die einen Teil des durch den Motor (7) in Drehung versetzten Rotors (9) umfasst, sowie eine linear verschiebende Mutter (11) aufweist, die das Ankopplungsteil (19) umfasst.
